# EUROPÄISCHE PATENTSCHRIFT

(11) **EP 2 197 224 B1**
(45) Veröffentlichungstag und Bekanntmachung des Hinweises auf die Patenterteilung: **13.12.2017**
(21) Anmeldenummer: 08171710.0
(22) Anmeldetag: 15.12.2008
(51) Int. Cl.: H04W 16/18, H04W 64/00, H04W 92/20

(54) **Kommunikationsvorrichtung, Verwendung einer Kommunikationsvorrichtung, Verfahren zur Anzeige einer Verbindungsqualität**
Communication device, use of same, method for displaying a connection quality
Dispositif de communication, utilisation d'un dispositif de communication, procédé destiné à l'affichage d'une qualité de liaison

(43) Veröffentlichungstag der Anmeldung: 16.06.2010
(73) Patentinhaber: INDUSTRIEANLAGEN-BETRIEBSGESELLSCHAFT M.B.H., 85521 Ottobrunn (DE)
(72) Erfinder: Schaefer, Michael, 14469, Potsdam (DE); Pommnitz, Jörg, 13187, Berlin (DE)
(74) Vertreter: Bohnenberger, Johannes

(56) Entgegenhaltungen:
- WO-A-2007/110759
- US-A1- 2004 142 699
- US-A1- 2007 161 371
- US-A1- 2007 291 660

## Beschreibung

Die Erfindung betrifft eine mobile Kommunikationsvorrichtung zur Bereitstellung eines Ad-hoc-Netzwerkes und ein Verfahren zur Anzeige einer Verbindungsqualität.

Für die Polizei, die Feuerwehr, den Katastrophenschutz und das Militär gibt es zahlreiche Einsatzgebiete, in denen keine Infrastruktur zur Kommunikation der Einsatzkräfte untereinander vorhanden ist.

In diesen Gebieten ist es wünschenswert, Kommunikations- und Datenübertragungsnetzwerke bereit zu stellen, die sowohl die Kommunikation einzelner Personen miteinander sowie die Übertragung von Daten und/oder deren Abfrage ermöglichen.

In diesem Bereich ist der Standard TETRA (Terrestrial Trunked Radio) bekannt. Hierbei handelt es sich um einen digitalen Bündelfunk, der als universelle Plattform für unterschiedliche Mobilfunkdienste gedacht ist. Mit TETRA lassen sich Universalnetze aufbauen, über die der gesamte betriebliche Mobilfunk von Anwendungen, insbesondere mit besonderen Sicherheitsanforderungen, abgewickelt werden kann.

Beim Aufspannen eines TETRA-Funknetzes ist es bekannt, eine Vielzahl von stationären Basisstationen mit diesen zugeordneten Funkzellen bereit zu stellen, die ein vorgegebenes Gebiet abdecken. In dem abgedeckten Gebiet ist ein vermittelter Kommunikationsmodus möglich, bei dem die einzelnen Endgeräte über die Basisstation miteinander kommunizieren. Hierbei werden ein Zellwechsel und die damit verbundene Gesprächsweitergabe (Handover) unterstützt. TETRA-Endgeräte können auch in einem "Direktmodus" und "Relais"-Modus miteinander kommunizieren. Somit ist es möglich, in Gebieten, die nicht von den Basisstationen erfasst werden, also keine Infrastruktur aufweisen, von Gerät zu Gerät zu kommunizieren. Bei dem Einsatz einer Vielzahl von Geräten kann es hierbei zur Datenkollision kommen, so dass nur eine eingeschränkte Kommunikation auf einer geringen Bandbreite möglich ist.

Es ist bekannt, mobile Basisstationen zu verwenden, um die genannten Nachteile zu überwinden. Dennoch ist der TETRA-Standard in seiner Verwendung stark beschränkt.

Die US 2004/142699 A1 beschreibt ein Mobilfunksystem mit einer Vielzahl von Basisstationen, die miteinander in kommunikativer Verbindung stehen. Die einzelnen Basisstationen weisen jeweils einen drahtlosen Empfänger auf, der es ermöglicht, mobile Endgeräte innerhalb eines drahtlosen Netzwerkes zu betreiben. Die einzelnen Basisstationen messen die Verbindungsqualität zu benachbarten Basisstationen. Eine vorgegebene geographische Fläche soll mit einer ausreichenden Anzahl von Basisstationen versehen werden, um ein flächendeckendes Funknetz bereitzustellen.

Die US 2007/161371 A1 beschreibt ein Prozesssteuersystem, bei dem eine Vielzahl von Feldgeräten an Knotenpunkten mit einer Zentrale, insbesondere einem Host-Computer, mittels eines drahtlosen Netzwerkes kommuniziert. Die einzelnen Feldgeräte weisen Kommunikationseinrichtungen auf, die eine Kommunikation mit benachbarten Feldgeräten sowie mit der Zentrale ermöglichen. Um geographisch weit entfernte Feldgeräte an die Zentrale anzubinden, stellt das System eine mittelbare Kommunikation bereit, bei der Datenpakete über eine Vielzahl von Feldgeräten bis zur Zentrale weitergeleitet werden. Das Netzwerk kann durch Visualisierung der von den Knotenpunkten gesammelten Positionen und Verbindungsqualitäten überwacht werden, um Fehler zu erkennen und die Kommunikation durch Anpassung des Netzwerks zu verbessern.

Des Weiteren ist es problematisch, die mobilen Basisstationen derart zu positionieren, dass eine flächendeckende Kommunikation möglich ist.

Ausgehend von diesem Stand der Technik ist es Aufgabe der vorliegenden Erfindung, eine verbesserte Kommunikationsvorrichtung für den mobilen Einsatz bereit zu stellen. Insbesondere soll eine Kommunikationsvorrichtung bereitgestellt werden, die ein sicheres und effizientes Kommunikationsnetzwerk, insbesondere umfassend eine Vielzahl von Kommunikationsvorrichtungen, aufspannt. Die Kommunikationsvorrichtung sollte Hilfestellungen bei deren Positionierung gewährleisten.

Diese Aufgabe wird erfindungsgemäß durch eine Kommunikationsvorrichtung nach Anspruch 1 und ein Verfahren zur Anzeige einer Verbindungsqualität nach Anspruch 8 gelöst.

Insbesondere wird die Aufgabe durch eine mobile Kommunikationsvorrichtung zur Bereitstellung eines Ad-hoc-Netzwerkes gelöst, wobei die Kommunikationsvorrichtung umfasst:
- eine erste Kommunikationseinrichtung zur Funkkommunikation mit weiteren Kommunikationsvorrichtungen;
- eine Messeinrichtung zur Erfassung mindestens einer Verbindungsqualität zu mindestens einer der weiteren Kommunikationsvorrichtungen;
wobei die mobile Kommunikationsvorrichtung zum Empfangen und Verarbeiten von Daten von mindestens einer der weiteren Kommunikationsvorrichtungen ausgebildet ist, wobei diese Daten mindestens eine weitere Verbindungsqualität zwischen einer ersten und zweiten weiteren Kommunikationsvorrichtung angeben und die mobile Kommunikationsvorrichtung umfasst:
- eine Positionsbestimmungseinrichtung zur Bestimmung der Positionen aller Kommunikationsvorrichtungen;
- eine Ausgabeeinrichtung zur Darstellung mindestens der Verbindungsqualitäten und der bestimmten Positionen;
- eine zweite Kommunikationseinrichtung zur Funkkommunikation mit mindestens einem Endgerät, wobei die mobile Kommunikationsvorrichtung zur Bereitstellung einer Verbindung zwischen dem mindestens einen Endgerät und mindestens einer der weiteren Kommunikationsvorrichtungen ausgebildet ist.

Ein wesentlicher Punkt der Erfindung besteht also darin, mehrere Kommunikationsvorrichtungen über entsprechende erste Kommunikationseinrichtungen miteinander zu verbinden und so ein flächendeckendes und/oder bevorzugt ausgestaltetes Kommunikationsnetzwerk über Funkverbindungen aufzubauen. Hierbei erweist es sich als besonders anspruchsvoll, die einzelnen Kommunikationsvorrichtungen derart zu positionieren, dass diese sicher miteinander kommunizieren können. Hierfür stellt die vorliegende Erfindung eine Messeinrichtung, eine Positionsbestimmungseinrichtung und eine Ausgabeeinrichtung bereit, die die Verbindungsqualität zu den einzelnen Kommunikationsvorrichtungen und deren Position erfassen und entsprechend darstellen. Da die einzelnen Kommunikationsvorrichtungen vorzugsweise mobil sind, lassen sich so optimale Positionen zur Positionierung der einzelnen Kommunikationsvorrichtungen bestimmen. Hierbei können ungünstige Geländeausprägungen, beispielsweise ein hohes Gebäude berücksichtigt werden. Des Weiteren können die Kommunikationsvorrichtungen so ausgerichtet und aufgestellt werden, dass ein möglichst großes Gebiet oder ein gewünschtes Teilgebiet von dem Funknetzwerk abgedeckt wird.

Die Kommunikationsvorrichtung ist zum Empfangen und Verarbeiten von Daten von mindestens einer weiteren Kommunikationsvorrichtung ausgebildet, wobei diese Daten mindestens eine weitere Verbindungsqualität zwischen einer ersten und zweiten weiteren Kommunikationsvorrichtung angeben und die Ausgabeeinrichtung insbesondere zur Darstellung der weiteren Verbindungsqualität zwischen der ersten und zweiten weiteren Kommunikationsvorrichtung ausgebildet ist.

Vorzugsweise kann die erfindungsgemäße Kommunikationsvorrichtung die Verbindungsqualität zu den erreichbaren Kommunikationsvorrichtungen unmittelbar erfassen. Zur besseren Positionierung der einzelnen Kommunikationsvorrichtungen ist es hilfreich, wenn des Weiteren weitere Verbindungsqualitäten zwischen einzelnen Kommunikationsvorrichtungen erfasst und angezeigt werden können. Somit ist es beispielsweise denkbar, eine Kommunikationsverbindung zu einer weit entfernten, nicht direkt erreichbaren Kommunikationsvorrichtung über eine Vielzahl von miteinander in Verbindung stehenden Kommunikationsvorrichtungen herzustellen. Des Weiteren können Schwachstellen innerhalb des aufgespannten Kommunikationsnetzwerks berücksichtigt und ausgeglichen werden. Beispielsweise ist eine Positionierung der erfindungsgemäßen Kommunikationsvorrichtung denkbar, bei der zu einer ersten weiteren Kommunikationsvorrichtung eine starke und zu einer zweiten weiteren Kommunikationsvorrichtung eine schwache Verbindung besteht. Sobald eine starke Kommunikationsverbindung zwischen der ersten und zweiten weiteren Kommunikationsvorrichtung vorliegt, kann die schwache, unmittelbare Kommunikationsverbindung zu der zweiten weiteren Kommunikationsvorrichtung durch eine indirekte Kommunikationsverbindung über die erste weitere Kommunikationsvorrichtung ausgeglichen werden.

Entsprechende Daten, die die Verbindungsqualität zwischen den weiteren Kommunikationsvorrichtungen angeben, können über vorhandene Kommunikationsverbindungen übermittelt werden. Diese Daten werden von der erfindungsgemäßen Kommunikationsvorrichtung ausgewertet und entsprechend angezeigt.

Die erfindungsgemäße Kommunikationsvorrichtung kann zum Empfang und Verarbeiten von Daten von der mindestens einen weiteren Kommunikationsvorrichtung ausgebildet sein, wobei die Daten Positionen bezüglich der weiteren Kommunikationsvorrichtung umfassen. Diese Positionen können absolute und relative Positionen sein. Um die einzelnen Verbindungsqualitäten zwischen den einzelnen Kommunikationsvorrichtungen besser nutzen zu können, insbesondere für die bessere Positionierung der einzelnen Kommunikationsvorrichtungen, ist es hilfreich, die Positionen der weiteren Kommunikationsvorrichtungen zu kennen. Es werden also auf der Ausgabeeinrichtung die Verbindungsqualitäten und die einzelnen Positionen der Kommunikationsvorrichtungen angezeigt.

Es ist möglich, dass die Positionsbestimmungseinrichtung, insbesondere ein GPS-Gerät und/oder ein Gerät zur Bestimmung der Position nach dem Galileo-Standard und/oder eine entsprechend konfigurierte WLAN-Sende-Empfangseinheit, zum Bestimmen des Standorts oder der Position umfasst, wobei die Kommunikationsvorrichtung zum Darstellen der Verbindungsqualität in Bezug auf den Standort ausgebildet ist. Die erfindungsgemäße Kommunikationsvorrichtung ermittelt also ihre eigene Position oder ihren eigenen Standort und kann diesen mittels der Ausgabeeinrichtung darstellen. Somit kann beispielsweise eine Historie von Verbindungsqualitäten erfasst und dargestellt werden, wobei vorzugsweise zur Stationierung der Kommunikationsvorrichtung der Standort ausgewählt wird, an dem ein geeignetes Netzwerk zwischen den einzelnen Kommunikationsvorrichtungen aufgespannt wird. Es ist also möglich, eine Vielzahl von Positionen abzufahren und die Position auszuwählen, die das beste Ergebnis erzielt. Des Weiteren können die Positionsdaten, die von anderen Kommunikationsvorrichtungen übermittelt wurden, in eine Relation zur eigenen Position oder zum eigenen Standort gesetzt werden. Somit ist es möglich, einen eigenen Standort deterministisch anzufahren oder aufzusuchen oder andere Kommunikationsvorrichtungen zu positionieren.

Die Kommunikationsvorrichtung kann einen Kartenspeicher mit Kartendaten umfassen, wobei die Kommunikationsvorrichtung zum Darstellen des Standorts der Kommunikationsvorrichtungen innerhalb einer Kartendarstellung ausgebildet ist. Die Kartendaten können eine Bilddatei, beispielsweise ein JPEG sein, die vorab oder am Einsatzort kalibriert wurde. Alternativ kann es sich hierbei um Vektordaten handeln. Die Kartendaten geben Aufschluss über die geografische Beschaffenheit des Einsatzgebietes. Bei einer Berücksichtigung der Kartendaten kann eine geografisch geeignete Position für die erfindungsgemäße Kommunikationsvorrichtung ausgewählt werden, wobei vorzugsweise die Positionen der weiteren Kommunikationsvorrichtungen berücksichtigt werden.

Die Messeinrichtung kann zur Erfassung von Qualitätsdaten bezüglich einer Datenübertragungsrate und/oder einer Paketverlustrate und/oder einer Latenzzeit und zur Ermittlung der ersten und/oder zweiten Verbindungsqualität unter Berücksichtigung der Qualitätsdaten ausgebildet sein. Auch weitere Verbindungsqualitäten können unter Berücksichtigung der vorgenannten Faktoren abgeschätzt oder berechnet werden. Weitere Kriterien für die Verbindungsqualität können die verwendete Übertragungstechnologie (z.B. W-LAN oder WiMax) und/oder die Kosten sein, die für das Verwenden eines bestimmten Übertragungsdienstes anfallen. Diese Kriterien können als Verbindungsqualität oder zusätzlich zu dieser, entsprechend aufgearbeitet, von der Ausgabeeinrichtung angezeigt werden. Die Messeinrichtung kann auch zum Erfassen einer Netzwerktopologie und/oder eines bevorzugten oder möglichen Routings in mindestens einem Teil des aufgespannten Netzwerkes ausgebildet sein. So können festgelegte oder bevorzugte Wege der Nachrichtenströme zusätzlich oder als Verbindungsqualität durch die Ausgabeeinrichtung angezeigt werden.

Die Kommunikationsvorrichtung umfasst eine zweite Kommunikationseinrichtung zur Kommunikation mit mindestens einem Endgerät. Es ist also Ziel der Kommunikationsvorrichtung nicht nur eine Kommunikation zwischen einer Vielzahl von Kommunikationsvorrichtungen bereit zu stellen, sondern ein temporäres oder stationäres Funkkommunikationsnetz oder Funknetz für Endgeräte aufzubauen. Üblicherweise kann jede Kommunikationsvorrichtung mit einer entsprechenden zweiten Kommunikationseinrichtung ein bestimmtes Gebiet abdecken. Das Gebiet, das sich abdecken lässt, hängt beispielsweise von der Leistung der Kommunikationseinrichtung, sowie von der geografischen Beschaffenheit dieses Gebiets ab. Es ist Aufgabe der vorliegenden Erfindung, ein entsprechendes Funknetzwerk bereit zu stellen, das einen flächendeckenden Empfang für die Endgeräte, die häufig über eine wesentlich geringere Sendeleistung als die Kommunikationseinrichtungen der Kommunikationsvorrichtungen verfügen, zu gewährleisten. Häufig ist es ausreichend das Teilgebiet mit der zweiten Kommunikationseinrichtung abzudecken, in dem die Einsatzkräfte tätig sind.

Die Kommunikationsvorrichtung ist zur Bereitstellung einer Verbindung zwischen dem mindestens einen Endgerät und mindestens einer der weiteren Kommunikationsvorrichtungen ausgebildet. Das heißt, ein Endgerät kann über eine erste Kommunikationsvorrichtung zu einer zweiten Kommunikationsvorrichtung oder einer weiteren Kommunikationsvorrichtung kommunizieren. Des Weiteren kann eine Endgerät-zu-Endgerät-Kommunikation stattfinden, wobei eine Vielzahl von Kommunikationsvorrichtungen involviert ist.

Die erste und/oder die zweite Kommunikationseinrichtung kann eine WLAN-Sende-Empfangseinheit (Wireless-Local-Area-Network-Empfangseinheit) und/oder eine WiMax-Sende-Empfangseinheit (WiMax = Worldwide Interoperability for Microwave Access) umfassen. Die Sende-Empfangseinheit ist also dazu geeignet, ein drahtloses Netzwerk aufzuspannen. Dieses Funknetz kann beispielsweise gemäß einem Standard der IEEE-802.11-Familie oder der IEEE 802.16-Familie organisiert sein. Es ist insbesondere bei der ersten Kommunikationseinrichtung auch die Verwendung von Richtfunk denkbar.

Des Weiteren kann die Kommunikationsvorrichtung wie vorab beschrieben zur Positionierung einer Vielzahl von Kommunikationsvorrichtungen zum Aufspannen eines gewünschten, insbesondere ein Einsatzgebiet abdeckendes Kommunikationsnetzwerks und/oder zur Überwachung des besagten Kommunikationsnetzwerks verwendet werden.

Die Kommunikationsvorrichtung kann also vorteilhaft dazu eingesetzt werden, ein geeignetes Kommunikationsnetzwerk insbesondere für portable und/oder leistungsschwache Endgeräte aufzuspannen. Die einzelnen Kommunikationsvorrichtungen stellen hierbei die Infrastruktur in geeigneter Weise bereit.

Des Weiteren wird die Aufgabe durch ein Verfahren zur Anzeige einer Verbindungsqualität zwischen einer Vielzahl von Kommunikationsvorrichtungen mit jeweils einer ersten Kommunikationseinrichtung gelöst, wobei das Verfahren die folgenden Schritte umfasst:
a) Ermitteln mindestens einer Position einer ersten Kommunikationsvorrichtung;
b1) Bestimmen mindestens einer ersten Verbindungsqualität zu mindestens einer weiteren Kommunikationsvorrichtung;
b2) Bestimmen mindestens einer weiteren Verbindungsqualität, zwischen einer ersten und einer zweiten weiteren Kommunikationsvorrichtung durch ein Abfragen und/oder Empfangen von Daten von mindestens einer der weiteren Kommunikationsvorrichtung seitens der ersten Kommunikationsvorrichtung;
c) Anzeigen der Verbindungsqualitäten bezüglich der Positionen der Kommunikationsvorrichtung auf einer Ausgabeeinrichtung der ersten Kommunikationsvorrichtung
d) ein Abfragen und/oder Empfangen sowie ein Anzeigen der Position der weiteren Kommunikationsvorrichtung;
e) ein Bestimmen und Anzeigen eines Sende- und/oder Empfangsbereichs einer zweiten Kommunikationseinrichtung zur Funkkommunikation zu Endgeräten.

Weitere vorteilhafte Ausführungsformen ergeben sich aus den Unteransprüchen.

Nachfolgend wird die Erfindung anhand von einigen Ausführungsbeispielen beschrieben, die mittels Abbildungen näher erläutert werden. Hierbei zeigen:
- Fig. 1 ein Einsatzgebiet mit einer Vielzahl von mobilen Einsatzfahrzeugen;
- Fig. 2 eine Darstellung des Einsatzgebiets mit der Vielzahl von mobilen Einsatzfahrzeugen auf einem Bildschirm; und
- Fig. 3 den Aufbau einer mobilen Kommunikationsvorrichtung in einem der mobilen Einsatzfahrzeuge.

In der nachfolgenden Beschreibung werden für gleiche und gleich wirkende Teile dieselben Bezugsziffern verwendet.

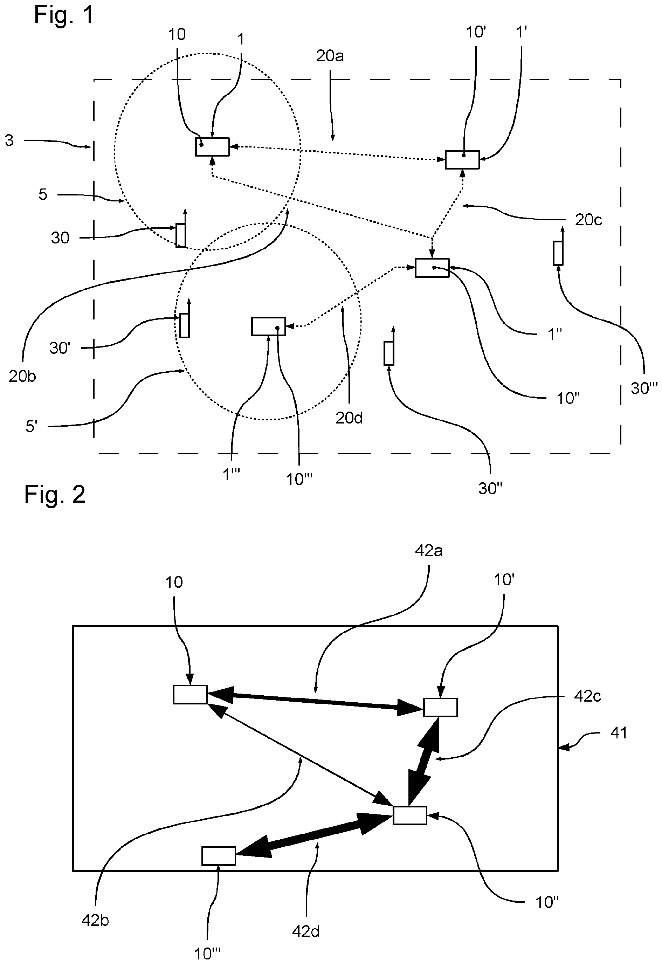

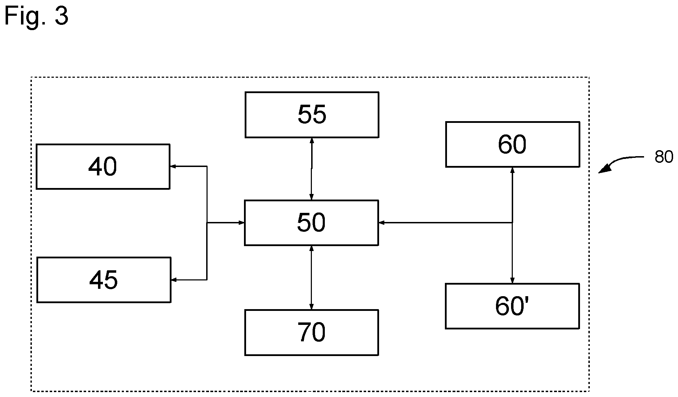

Fig. 1 zeigt ein Einsatzgebiet 3, das durch ein gestricheltes Rechteck symbolisiert wird. Erfindungsgemäß soll in dem Einsatzgebiet 3 ein flächendeckendes Funknetzwerk für eine Vielzahl von Handgeräten 30, 30', 30", 30'" und eine Vielzahl von mobilen Einsatzfahrzeugen 10, 10', 10", 10'" bereitgestellt werden. Dieses Funknetzwerk soll eine Kommunikation zwischen den einzelnen Handgeräten 30, 30', 30", 30'", zwischen den mobilen Einsatzfahrzeugen 10, 10', 10", 10'" sowie zwischen den mobilen Einsatzfahrzeugen 10, 10', 10", 10'" und den Handgeräten 30, 30', 30", 30'" ermöglichen. Da es sich bei den Handgeräten 30, 30', 30", 30''' um portable Geräte handelt, ist deren Leistung begrenzt. Des Weiteren können die Handgeräte 30, 30', 30", 30'" bezüglich der von ihnen bereitgestellten Dienste stark eingeschränkt sein. Beispielsweise ist es mit diesen nicht möglich, eine Satellitenkommunikation zu einem entfernten Standort aufzubauen oder Daten, möglicherweise über das Internet, von einer entfernten Datenbank abzufragen. Um eine effiziente Kommunikation (Daten oder Sprache) zu gewährleisten, sind die einzelnen mobilen Einsatzfahrzeuge 10, 10', 10", 10'" jeweils mit einer mobilen Kommunikationsvorrichtung 80 (vgl. Fig. 3) ausgestattet. Die mobile Kommunikationsvorrichtung 80 umfasst eine Datenverarbeitungseinrichtung 50, eine Anzeigeeinrichtung 40 sowie eine Eingabeeinrichtung 45 zur Interaktion mit einem Benutzer und eine erste Kommunikationseinrichtung 60 sowie eine zweite Kommunikationseinrichtung 60'.

Die erste Kommunikationseinrichtung 60 ist dazu ausgebildet, eine Kommunikation zwischen den einzelnen mobilen Einsatzfahrzeugen 10, 10', 10", 10'" herzustellen. Die zweite Kommunikationseinrichtung 60' dient zur Kommunikation mit den Handgeräten 30, 30', 30", 30'", die in unmittelbarer Reichweite sind. Somit bietet die mobile Kommunikationsvorrichtung 80 einen Kommunikationsdienst für die Handgeräte 30, 30', 30", 30'" an, den die Geräte, die sich in unmittelbarer Reichweite befinden, nutzen können. Der Dienst ermöglicht es Handgeräten 30, 30', 30", 30'", die sich innerhalb einer von der zweiten Kommunikationseinrichtung 60' aufgespannten Handgerätszelle 5 (eine Funkzelle für Handgeräte) befinden, miteinander zu kommunizieren. Des Weiteren kann mit dem zugehörigen mobilen Einsatzfahrzeug 10, 10', 10", 10'" kommuniziert werden. In dem in Fig. 1 gezeigten Ausführungsbeispiel kann das Handgerät 30 direkt mit dem mobilen Einsatzfahrzeug 10 kommunizieren. Des Weiteren übernimmt die mobile Kommunikationsvorrichtung 80 die Funktion eines Routers oder Switch. Somit kann eine Kommunikation zwischen mehreren Handgerätzellen 5, 5' ermöglicht werden. Im dargestellten Beispiel kann das Handgeräte 30 mit dem Handgerät 30' kommunizieren, wobei das Handgerät 30 in die Handgerätzelle 5 des mobilen Einsatzfahrzeugs 10 und das Handgerät 30' in die Handgerätzelle 5' des mobilen Einsatzfahrzeuges 10" eingeloggt sind. Die Sprachdaten werden also von dem Handgerät 30 über die zweite Kommunikationsvorrichtung 60' zu dem mobilen Einsatzfahrzeug 10 übertragen. Diese Daten werden von der Datenverarbeitungseinrichtung 50 verarbeitet und über die erste Kommunikationsvorrichtung 60 an ein weiteres mobiles Einsatzfahrzeug 10, 10', 10", 10'", nämlich das mobile Einsatzfahrzeug 10" weitergeleitet. Dort werden die Daten wiederum von einer dort vorgesehenen mobilen Kommunikationsvorrichtung 80 empfangen und über die erste Kommunikationsvorrichtung 60 des mobilen Einsatzfahrzeugs 10" an die erste Kommunikationseinrichtung 60 des mobilen Einsatzfahrzeuges 10'" weitergeleitet. Die mobile Kommunikationsvorrichtung 80 des mobilen Einsatzfahrzeuges 10'" kennt das in seine Handgerätzelle 5' eingeloggte Handgerät 30' und stellt diesem die entsprechenden Sprachdaten zur Verfügung. Es ist offensichtlich, dass auch eine bidirektionale Kommunikation bereitgestellt werden kann.

Das Routing kann beispielsweise über ein IP-Netz erfolgen, wobei entsprechende Routing-Protokolle bekannt sind. Die Kommunikation zwischen den Handgeräten 30, 30', 30", 30''' und der zweiten Kommunikationsvorrichtung 60' sowie zwischen den ersten Kommunikationsvorrichtungen 60 kann über ein WLAN bewerkstelligt werden (beispielsweise gemäß dem Standard der IEEE-802.11- Familie).

Je nach der geografischen Beschaffenheit des Einsatzgebiets 3 ist es problematisch, die mobilen Einsatzfahrzeuge 10, 10', 10", 10'" derart zu positionieren, dass ein flächendeckendes Funknetz für die einzelnen Handgeräte 30, 30', 30", 30'" entsteht. Des Weiteren kann es notwendig sein, dass die einzelnen mobilen Einsatzfahrzeuge 10, 10', 10", 10'" derart positioniert sind, dass eine leistungsstarke Verbindung 20a, 20b, 20c, 20d, insbesondere Funkverbindung, zwischen diesen vorliegt. So könnte eine schwache Verbindung 20a, 20b, 20c, 20d, nicht ausreichen, um gewisse Dienste (beispielsweise Bildtelefonie, Datenabfragen von Datenbanken) anzubieten.

Daher ist es notwendig, die Standorte 1, 1', 1", 1'" der einzelnen mobilen Einsatzfahrzeuge 10, 10', 10", 10'" möglichst optimal zu wählen. Um dem Anwender bzw. den Anwendern der mobilen Kommunikationsvorrichtung 80 die Auswahl des besten Standorts 1, 1', 1", 1''' zu erleichtern, hat die mobile Kommunikationsvorrichtung 80 z.B. des mobilen Einsatzfahrzeuges 10 die Anzeigeeinrichtung 40 sowie eine GPS-Empfangseinheit 70. Mittels der GPS-Empfangseinrichtung 70 kann die Datenverarbeitungseinrichtung 50 die Position der mobilen Kommunikationsvorrichtung 80 und somit des zugehörigen mobilen Einsatzfahrzeuges 10 bestimmen und entsprechend auf einem Bildschirm 41 (vgl. Fig. 2) der Anzeigeeinrichtung 40 darstellen. Des Weiteren bestimmt die Datenverarbeitungseinrichtung 50, zu welchen der mobilen Einsatzfahrzeuge 10, 10', 10", 10''' eine Verbindung 20a, 20b, 20c, 20d, vorliegt.

Im in Fig. 1 gezeigten Ausführungsbeispiel kann das mobile Einsatzfahrzeug 10 Signale von den mobilen Einsatzfahrzeugen 10', 10" empfangen. Es besteht also eine erste Verbindung 20a zwischen dem mobilen Einsatzfahrzeug 10 und dem mobilen Einsatzfahrzeug 10' und eine zweite Verbindung 20b zwischen dem mobilen Einsatzfahrzeug 10 und dem mobilen Einsatzfahrzeug 10". Die Datenverarbeitungseinrichtung 50 kann diese Verbindungen 20a, 20b erfassen und auf dem Bildschirm 41 darstellen. Des Weiteren besteht eine dritte Verbindung 20c zwischen den mobilen Einsatzfahrzeugen 10', 10" und eine vierte Verbindung 20d zwischen den mobilen Einsatzfahrzeugen 10" und 10'''. Das Vorhandensein der dritten und vierten Verbindung 20c, 20d wird der mobilen Kommunikationsvorrichtung 80 des mobilen Einsatzfahrzeuges 10 von den mobilen Kommunikationsvorrichtungen 80 der weiteren mobilen Einsatzfahrzeuge 10', 10", 10''' kommuniziert. Die Datenverarbeitungseinrichtung 50 verarbeitet diese Informationen und stellt ebenfalls die dritte und vierte Verbindung 20c, 20d auf dem Bildschirm 41 dar.

Des Weiteren können die weiteren mobilen Einsatzfahrzeuge 10', 10", 10''' mit weiteren GPS-Empfängern 70 ausgestattet werden und die Koordination der Standorte 1', 1", 1''' an die mobile Kommunikationsvorrichtung 80 des mobilen Einsatzfahrzeugs 10 übertragen. Die Datenverarbeitungseinrichtung 50 des mobilen Einsatzfahrzeugs 10 kann dann nicht nur sämtliche Verbindungen 20a, 20b, 20c, 20d darstellen, sondern auch die Positionen bzw. Standorte 1, 1', 1", 1''' der mobilen Einsatzfahrzeuge 20, 20', 20", 20"'.

In einem weiteren Ausführungsbeispiel können die Positionen der mobilen Einsatzfahrzeuge 10, 10', 10", 10'" über eine Triangulation, beispielsweise eine W-LAN-Ortung der empfangenen Signale bestimmt werden.

Erfindungsgemäß ist es vorgesehen, die vorliegenden Verbindungen 20a, 20b, 20c, 20d auf dem Bildschirm 41 des mobilen Einsatzfahrzeuges 10 oder den Bildschirmen 41 der mobilen Einsatzfahrzeuge 10', 10", 10'" zu überwachen und die einzelnen Standorte 1,1', 1", 1''' so lange zu verändern, bis eine optimale Funknetzabdeckung innerhalb des Einsatzgebiets 3 erzielt wird.
Um die einzelnen optimalen Standorte 1, 1', 1", 1''' besser identifizieren zu können, kann die mobile Kommunikationsvorrichtung 80 der einzelnen Einsatzfahrzeuge 10, 10', 10", 10'" einen Kartenspeicher 55 umfassen, der Daten bezüglich der geografischen Umgebung umfasst. Die Standorte 1, 1', 1", 1"' und die Verbindungen 20a, 20b, 20c, 20d können also in eine Karte eingezeichnet und derart aufbereitet dem Benutzer über den Bildschirm 41 zugänglich gemacht werden.

In dem vorab beschriebenen Ausführungsbeispiel wurde bezüglich der Verbindungsqualität zwischen den einzelnen mobilen Einsatzfahrzeugen 10, 10', 10", 10'" lediglich berücksichtigt, ob eine Verbindung 20a, 20b, 20c, 20d vorlag oder nicht. Bei der Angabe und bei dem Anzeigen der Verbindungsqualität ist es jedoch auch möglich, weitere Kriterien zu berücksichtigen. Beispielsweise kann eine Signalstärke oder ein Durchsatz einer Verbindung 20a, 20b, 20c, 20d gemessen und mit Symbolen, z.B. Verbindungspfeilen 42a, 42b, 42c, 42d angezeigt werden. Somit können Standorte 1, 1', 1", 1''' gezielt ausgewählt werden.

Gemäß dem Ausführungsbeispiel der Figuren 1 und 2 besteht eine sehr starke Verbindung 20c zwischen den mobilen Einsatzfahrzeugen 10', 10". Eine weniger starke Verbindung 20d liegt zwischen den mobilen Einsatzfahrzeugen 10" und 10"' vor. Aufgrund der Distanz und möglicherweise den geografischen Gegebenheiten ist die Verbindungsqualität der Verbindungen 20a und 20b noch einmal deutlich niedriger. Die Darstellung auf dem Bildschirm 41 spiegelt die Verbindungsqualität durch die Linienstärke der einzelnen Verbindungspfeile 42a, 42b, 42c, 42d wieder. Beispielsweise ist der Verbindungspfeil 42a (Verbindung 20a) gegenüber dem Verbindungspfeil 42c (Verbindung 20c) sehr dünn.

Der Benutzer der mobilen Kommunikationseinrichtung 80 kann also der Darstellung aus Fig. 2 entnehmen, dass sich das mobile Einsatzfahrzeug 10" problemlos weiter von dem Verbund von mobilen Einsatzfahrzeugen 10, 10', 10''' entfernen kann, ohne dass die Verbindungen 20c und 20d abreißen. Demgegenüber kann sich das mobile Einsatzfahrzeug 10 nur noch wenig von dem Verbund entfernen bevor sowohl die Verbindung 20a als auch die Verbindung 20b zusammenbricht und somit einen Teil des Funknetzwerks is oliert.

Die vorab beschriebene Kommunikationsvorrichtung 80 kann als eine einzelne kompakte Einheit, umfassend die einzelnen elektronischen Bauelemente zur Verwirklichung der oben genannten Funktionalität, aufgebaut sein. Alternativ können die Datenverarbeitungseinrichtung 50 sowie ein entsprechender Datenspeicher für Programmanweisungen in einer Zentraleinheit zusammengefasst sein und die einzelnen Komponenten, insbesondere der Kartenspeicher 55, die erste und zweite Kommunikationseinrichtung 60, 60', die Eingabeeinrichtung 45, die GPS-Empfangseinrichtung 70 und/oder die Anzeigeeinrichtung 40 über eine oder mehrere Schnittstellen, z.B. USB, W-LAN, Infrarot an die Zentraleinheit angeschlossen sein. Erfindungsgemäß kann die Messeinrichtung und/oder die Positionsbestimmungseinrichtung und/oder Ausgabeeinrichtung und/oder die Kommunikationseinrichtungen 60, 60' als interne oder externe Komponente verwirklicht sein. Gemäß dieser Anmeldung wird unter der Kommunikationsvorrichtung 80 die Zentraleinheit umfassend mögliche externe Komponenten, wie vorab beschrieben, verstanden.

### Bezugszeichenliste

- 1, 1', 1", 1''': Standort
- 3: Einsatzgebiet
- 5, 5': Handgerätzelle
- 10, 10', 10", 10"': mobiles Einsatzfahrzeug
- 20a, 20b, 20c, 20d: Verbindung
- 30, 30', 30", 30''': Handgerät
- 40: Anzeigeeinrichtung
- 42a, 42b, 42c, 42d: Verbindungspfeil
- 45: Eingabeeinrichtung
- 50: Datenverarbeitungseinrichtung
- 55: Kartenspeicher
- 60, 60': Kommunikationseinrichtung
- 70: GPS-Empfangseinrichtung
- 80: Kommunikationsvorrichtung

## Patentansprüche

1. Mobile Kommunikationsvorrichtung zur Bereitstellung eines Ad-hoc-Netzwerkes, umfassend:
- eine erste Kommunikationseinrichtung (60) zur Funkkommunikation mit weiteren Kommunikationsvorrichtungen (80);
- eine Messeinrichtung zur Erfassung mindestens einer Verbindungsqualität zu mindestens einer der weiteren Kommunikationsvorrichtungen (80);
**dadurch gekennzeichnet, dass**
die mobile Kommunikationsvorrichtung zum Empfangen und Verarbeiten von Daten von mindestens einer der weiteren Kommunikationsvorrichtungen (80) ausgebildet ist, wobei diese Daten mindestens eine weitere Verbindungsqualität zwischen einer ersten und zweiten weiteren Kommunikationsvorrichtung (80) angeben und die mobile Kommunikationsvorrichtung umfasst:
- eine Positionsbestimmungseinrichtung zur Bestimmung der Positionen aller Kommunikationsvorrichtungen;
- eine Ausgabeeinrichtung (40) zur Darstellung mindestens der Verbindungsqualitäten und der bestimmten Positionen;
- eine zweite Kommunikationseinrichtung (60') zur Funkkommunikation mit mindestens einem Endgerät (30, 30', 30", 30'"), wobei die mobile Kommunikationsvorrichtung (80) zur Bereitstellung einer Verbindung zwischen dem mindestens einen Endgerät (30, 30', 30", 30'") und mindestens einer der weiteren Kommunikationsvorrichtungen (80) ausgebildet ist.

2. Kommunikationsvorrichtung nach Anspruch 1,
**dadurch gekennzeichnet, dass**
die Kommunikationsvorrichtung (80) zur Bereitstellung einer Verbindung zwischen dem mindestens einen Endgerät (30, 30', 30", 30"') und mindestens einer der weiteren Kommunikationsvorrichtungen (80) ausgebildet ist.

3. Kommunikationsvorrichtung nach Anspruch 1,
**dadurch gekennzeichnet, dass**
die Kommunikationsvorrichtung (80) zum Empfangen und Verarbeiten von Daten von der mindestens einen weiteren Kommunikationsvorrichtung (80) ausgebildet ist, wobei diese Daten Positionen der weiteren Kommunikationsvorrichtungen (80) angeben.

4. Kommunikationsvorrichtung nach einem der vorhergehenden Ansprüche,
**dadurch gekennzeichnet, dass**
die Positionsbestimmungseinrichtung zur Bestimmung von geographischen Koordinaten der Kommunikationsvorrichtung, ausgebildet ist, wobei die Kommunikationsvorrichtung (80) zum Darstellen der Verbindungsqualitäten in Bezug auf die Koordinaten ausgebildet ist.

5. Kommunikationsvorrichtung nach einem der vorhergehenden Ansprüche, **gekennzeichnet durch**
einen Kartenspeicher (55) mit Kartendaten, wobei die Kommunikationsvorrichtung (80) zum Darstellen des Standorts (1) der Kommunikationsvorrichtungen (80) innerhalb einer Kartendarstellung ausgebildet ist.

6. Kommunikationsvorrichtung nach einem der vorhergehenden Ansprüche,
**dadurch gekennzeichnet, dass**
die Messeinrichtung zur Erfassung von Qualitätsdaten bezüglich einer Datenübertragungsrate und/oder einer Latenzzeit und/oder einer Paketverlustrate und/oder zur Erfassung von Kosten einer Verbindung zwischen den Kommunikationsvorrichtungen und/oder zur Erfassung der verwendeten Übertragungstechnologie und/oder zur Erfassung einer Netzwerktopologie ausgebildet ist und die Kommunikationsvorrichtung zur Aufbereitung und Darstellung der Qualitätsdaten und/oder der Kosten und/oder der Übertragungstechnologie und/oder der Netzwerktopologie ausgebildet ist.

7. Kommunikationsvorrichtung nach einem der vorhergehenden Ansprüche,
**dadurch gekennzeichnet, dass**
die erste und/oder die zweite Kommunikationseinrichtung (60, 60') eine WLAN- und/oder Wimax-Sende-Empfangseinheit umfasst.

8. Verfahren zur Anzeige einer Verbindungsqualität zwischen einer Vielzahl von Kommunikationsvorrichtungen (80) eines Ad-hoc-Netzwerkes mit jeweils einer ersten Kommunikationseinrichtung (60), umfassend die Schritte:
a) Ermitteln mindestens einer Position einer ersten Kommunikationsvorrichtung (80) mittels einer Positionsbestimmungseinrichtung der ersten Kommunikationsvorrichtung;
b1) Bestimmen mindestens einer ersten Verbindungsqualität zu mindestens einer weiteren Kommunikationsvorrichtung (80) mittels einer Messeinrichtung der ersten Kommunikationsvorrichtung;
b2) Bestimmen mindestens einer weiteren Verbindungsqualität, zwischen einer ersten und einer zweiten weiteren Kommunikationsvorrichtung (80) durch ein Abfragen und/oder Empfangen von Daten von mindestens einer der weiteren Kommunikationsvorrichtung (80) seitens der ersten Kommunikationsvorrichtung (80);
c) Anzeigen der Verbindungsqualitäten bezüglich der Positionen der Kommunikationsvorrichtung (80) auf einer Ausgabeeinrichtung (40) der ersten Kommunikationsvorrichtung (80);
d) ein Abfragen und/oder Empfangen sowie ein Anzeigen der Position der weiteren Kommunikationsvorrichtung (80) seitens der ersten Kommunikationsvorrichtung;
e) ein Bestimmen und Anzeigen eines Sende- und/oder Empfangsbereichs einer zweiten Kommunikationseinrichtung (60') zur Funkkommunikation zu Endgeräten (30, 30', 30", 30''').

9. Verfahren nach Anspruch 8,
**gekennzeichnet durch**
ein Auslesen und Anzeigen von Kartendaten, wobei die Verbindungsqualität und/oder die Position mindestens einer der Kommunikationsvorrichtungen (80) innerhalb der Kartendaten angezeigt werden

10. Verfahren nach einem der Ansprüche 8 oder 9,
**dadurch gekennzeichnet, dass**
das Bestimmen der Verbindungsqualität ein Bestimmen einer Datenübertragungsrate und/oder Latenzzeit und/oder einer Paketverlustrate umfasst.

11. Verfahren nach einem der Ansprüche 8 bis 10,
**gekennzeichnet durch**
ein Bestimmen und Anzeigen einer für eine Verbindung zwischen den Kommunikationsvorrichtungen (80) verwendeten Kommunikationstechnologie und/oder ein Bestimmen und Anzeigen der Kosten der Verbindung, insbesondere in Form einer Verbindungsqualität und/oder ein Bestimmen und Anzeigen einer Netzwerkstopologie.

## Claims

1. Mobile communication device for providing an ad hoc network, comprising:
- a first communication means (60) for radio communication with further communication devices (80);
- a measuring means for detecting at least one quality of connection to at least one of the further communication devices (80);
**characterized in that**
the mobile communication device is configured to receive and process data from at least one of the further communication devices (80), said data indicating at least one further connection quality between a first and a second further communication device (80), and the mobile communication device comprising:
- a position determining means for determining the position of all of the communication devices;
- an output means (40) for displaying at least the connection qualities and the determined positions;
- a second communication means (60') for radio communication with at least one terminal (30, 30', 30", 30"'), wherein the mobile communication device (80) is configured to provide a connection between the at least one terminal (30, 30', 30", 30"') and at least one of the further communication devices (80).

2. Communication device according to claim 1,
**characterized in that**
the communication device (80) is configured to provide a connection between the at least one terminal (30, 30', 30", 30'") and at least one of the further communication devices (80).

3. Communication device according to claim 1,
**characterized in that**
the communication device (80) is configured to receive and process data of the at least one further communication device (80), said data indicating positions of the further communication devices (80).

4. Communication device according to any one of the preceding claims,
**characterized in that**
the position determining means is configured to determine geographic coordinates of the communication device, wherein the communication device (80) is configured to display the connection qualities with respect to the coordinates.

5. Communication device according to any one of the preceding claims,
**characterized by**
a map memory (55) including map data, wherein the communication device (80) is configured to display the location (1) of the communication devices (80) within a map display.

6. Communication device according to any one of the preceding claims,
**characterized in that**
the measuring device is configured to acquire quality data with respect to a data transmission rate and/or a latency time and/or a packet loss rate and/or to acquire costs of a connection between the communication devices and/or to detect the employed transmission technology and/or to detect a network topology, and the communication device is configured to prepare and display the quality data and/or the costs and/or the transmission technology and/or the network topology.

7. Communication device according to any one of the preceding claims,
**characterized in that**
the first and/or second communication means (60, 60') comprise(s) a WLAN and/or Wimax transceiver unit.

8. Method for displaying a connection quality between a plurality of communication devices (80) of an ad hoc network having in each case a first communication means (60), comprising the steps of:
a) identifying at least one position of a first communication device (80) by means of a position determining means of the first communication device;
b1) determining at least one first quality of connection to at least one further communication device (80) by means of a measuring means of the first communication device;
b2) determining at least one further connection quality between a first and a second further communication device (80) by retrieving and/or receiving data from at least one further communication device (80) by means of the first communication device (80);
c) displaying the connection qualities with respect to the positions of the communication device (80) on an output device (40) of the first communication device (80);
d) retrieving and/or receiving as well as displaying the position of the further communication device (80) by means of the first communication device;
e) determining and displaying a transmitting and/or receiving range of a second communication means (60') for radio communication to terminals (30, 30', 30", 30"').

9. Method according to claim 8,
**characterized by**
reading and displaying map data, wherein the connection quality and/or the position of at least one of the communication devices (80) are displayed within the map data.

10. Method according to claim 8 or 9,
**characterized in that**
the determining of the connection quality comprises determining a data transmission rate and/or a latency time and/or a packet loss rate.

11. Method according to any one of claims 8 to 10,
**characterized by**
determining and displaying a communication technology employed for a connection between the communication devices (80) and/or determining and displaying the costs of the connection, in particular in the form of a connection quality, and/or determining and displaying a network topology.

## Revendications

1. Dispositif de communication mobile pour mise à disposition d'un réseau ad hoc, incluant :
- un premier moyen de communication (60) pour une communication radio avec d'autres dispositifs de communication (80) ;
- un moyen de mesure pour détecter au moins une qualité de liaison vers l'un au moins des autres dispositifs de communication (80) ;
**caractérisé en ce que**
le dispositif de communication mobile est réalisé pour recevoir et pour traiter des données provenant de l'un au moins des autres dispositifs de communication (80), lesdites données indiquant au moins une autre qualité de liaison entre un premier et un second autre dispositif de communication (80), et le dispositif de communication mobile inclut :
- un moyen de détermination de position pour déterminer les positions de tous les dispositifs de communication ;
- un moyen de sortie (40) pour la représentation au moins des qualités de liaison et des positions déterminées ;
- un second moyen de communication (60') pour une communication radio avec au moins un appareil terminal (30, 30', 30", 30'"), dans lequel le dispositif de communication mobile (80) est réalisé pour mettre à disposition une liaison entre ledit au moins un appareil terminal (30, 30', 30", 30'") et l'un au moins des autres dispositifs de communication (80).

2. Dispositif de communication selon la revendication 1,
**caractérisé en ce que** le dispositif de communication (80) est réalisé pour mettre à disposition une liaison entre ledit au moins un appareil terminal (30, 30', 30", 30'") et l'un au moins des autres dispositifs de communication (80).

3. Dispositif de communication selon la revendication 1,
**caractérisé en ce que** le dispositif de communication (80) est réalisé pour recevoir et pour traiter des données provenant dudit au moins un autre dispositif de communication (80), lesdites données indiquant des positions des autres dispositifs de communication (80).

4. Dispositif de communication selon l'une des revendications précédentes, **caractérisé en ce que** le moyen de détermination de position est réalisé pour déterminer des coordonnées géographiques du dispositif de communication, et le dispositif de communication (80) est réalisé pour représenter les qualités de liaison par référence aux coordonnées.

5. Dispositif de communication selon l'une des revendications précédentes, **caractérisé par** une mémoire de cartographie (55) avec des données de cartographie, et le dispositif de communication (80) est réalisé pour représenter le lieu de séjour (1) des dispositifs de communication (80) à l'intérieur d'une représentation de cartographie.

6. Dispositif de communication selon l'une des revendications précédentes, **caractérisé en ce que** le dispositif de mesure est réalisé pour détecter des données de qualité pour ce qui concerne un taux de transmission de données et/ou un temps de latence et/ou un taux de pertes de paquets et/ou pour détecter des coûts d'une liaison entre les dispositifs de communication et/ou pour détecter la technologie de transmission utilisée et/ou pour détecter une topologie de réseau, et le dispositif de communication est réalisé pour préparer et pour représenter les données de qualité et/ou les coûts et/ou la technologie de transmission et/ou la topologie de réseau.

7. Dispositif de communication selon l'une des revendications précédentes, **caractérisé en ce que** le premier et/ou le second moyen de communication (60, 60') inclut une unité Wi-Fi et/ou une unité émettrice/réceptrice du type WiMax.

8. Procédé pour afficher une qualité de liaison entre une pluralité de dispositifs de communication (80) d'un réseau ad hoc avec respectivement un premier moyen de communication (60), incluant les étapes consistant à :
a) déterminer au moins une position d'un premier dispositif de communication (80) au moyen d'un moyen de détermination de position du premier dispositif de communication ;
b1) déterminer au moins une qualité de liaison vers au moins un autre dispositif de communication (80) au moyen d'un moyen de mesure du premier dispositif de communication ;
b2) déterminer au moins une autre qualité de liaison, entre un premier et un second autre dispositif de communication (80) par une interrogation et/ou une réception de données de l'un au moins des autres dispositifs de communication (80), du côté du premier dispositif de communication (80) ;
c) afficher les qualités de liaison par référence aux positions du dispositif de communication (80) sur un moyen de sortie (40) du premier dispositif de communication (80) ;
d) interroger et/ou recevoir, ainsi qu'afficher la position de l'autre dispositif de communication (80) du côté du premier dispositif de communication ;
b) déterminer et afficher une zone d'émission et/ou de réception d'un second moyen de communication (60') pour la communication radio vers des appareils terminaux (30, 30', 30", 30"').

9. Procédé selon la revendication 8,
**caractérisé par** une étape consistant à lire et à afficher des données de cartographie, dans lequel la qualité de liaison et/ou la position de l'un au moins des dispositifs de communication (80) est indiquée à l'intérieur des données de cartographie.

10. Procédé selon l'une des revendications 8 ou 9,
**caractérisé en ce que** la détermination de la qualité de liaison inclut une détermination d'un taux de transmission de données et/ou d'un temps de latence et/ou d'un taux de pertes de paquets.

11. Procédé selon l'une des revendications 8 à 10,
**caractérisé par** une détermination et d'affichage d'une technologie de communication utilisée pour la liaison entre les dispositifs de communication (80) et/ou par une détermination et un affichage des coûts de la liaison, en particulier sous la forme d'une qualité de liaison, et/ou par une détermination et un affichage d'une topologie de réseau.
